# EUROPEAN PATENT APPLICATION

(11) **EP 3 570 146 A1**
(43) Date of publication of application: **20.11.2019**
(21) Application number: 19174898.7
(22) Date of filing: 16.05.2019
(51) Int. Cl.: G06F 3/01, A63F 13/285

(54) **KINESTHETIC FEEDBACK TO VIRTUAL AND AUGMENTED REALITY CONTROLLERS**

(30) Priority: 16.05.2018 US 201815981111
(71) Applicant: Immersion Corporation, San Jose, CA 95134 (US)
(72) Inventor: SWINDELLS, Colin, San Jose, CA California 95134 (US); RIHN, William S., San Jose, CA California 95134 (US)
(74) Representative: Slingsby Partners LLP

(57) **Abstract**

Systems and methods for providing kinesthetic feedback for virtual and augmented reality controllers are disclosed. One illustrative system described herein includes a interface device including a virtual or augmented reality controller configured to receive input from a user and output a controller signal and a haptic output device coupled to the virtual or augmented reality controller and to a mechanical ground, the haptic output device configured to output haptic effects. The system also includes a processor coupled to the virtual or augmented reality controller and the haptic output device, the processor configured to: receive the controller signal; determine a haptic effect based in part on the controller signal; and transmit a haptic signal associated with the haptic effect to the haptic output device.

## Description

### Field of the Invention

The present application relates to the field of user interface devices. More specifically, the present application relates to virtual and augmented reality controllers with haptics.

### Background

Virtual and Augmented Reality ("VR" and "AR") applications have become increasingly popular. Handheld controllers, including touch-enabled devices, which will be described collectively herein as "virtual reality controllers," are often used to interact with such applications. Some such devices may be configured with haptic actuators that provide vibrotactile effects to users of the VR and AR applications, however, such devices lack the capability to provide kinesthetic feedback. Accordingly, there is a need for kinesthetic haptic effects in virtual and augmented reality environments.

### Summary

Embodiments of the present disclosure comprise systems and methods for providing kinesthetic feedback for virtual and augmented reality controllers. In one embodiment, a system comprises a user interface device comprising a virtual or augmented reality controller configured to receive input from a user and output a controller signal and a haptic output device coupled to the virtual or augmented reality controller and to a mechanical ground, the haptic output device configured to output haptic effects. The system also comprises a processor coupled to the virtual or augmented reality controller and the haptic output device, the processor configured to: receive the controller signal; determine a haptic effect based in part on the controller signal; and transmit a haptic signal associated with the haptic effect to the haptic output device.

In some implementations, the haptic output device may comprise a cable assembly. In some implementations the haptic output device may comprise a rod assembly, such as a telescoping rod. In some alternative implementations, the haptic output device may comprise a brake for resisting a relative motion between the virtual or augmented reality controller and the mechanical ground. The brake may be any of an electromagnetic brake, an air bladder, a hydraulic brake, a rack-and-pinion brake, or a smart material. In implementations where the haptic output device comprises a telescopic rod, the telescopic rod may have a first rod segment and a second rod segment, and the brake may be affixed to the first rod segment and configured to exert a force against the second rod segment.

The haptic output device may further comprise a sensor for sensing a relative position between the virtual or augmented reality controller and the mechanical ground and generating a sensor signal reflecting the relative position. The processor may be configured to receive the sensor signal and determine the haptic effect based at least in part on the sensor signal.

The virtual or augmented reality controller may comprise a first virtual or augmented reality controller and a second virtual or augmented reality controller.

The mechanical ground may be coupled to either the user or a fixed structure.

The haptic output device may be configured to output a kinesthetic effect and/or a vibrotactile effect.

In some implementations, the haptic output device can comprise an actuator coupled to a mechanical ground by a coupling to the mechanical ground and to the virtual or augmented reality controller, the actuator configured to output a haptic effect on the controller by exerting a force on the coupling between the ground and the controller. The mechanical ground can comprise a strap configured to be worn by a user.

In another embodiment, a method for providing kinesthetic feedback for virtual and augmented reality controllers comprises receiving a controller signal from a sensor configured to detect an input from at least one virtual or augmented reality controller coupled to a mechanical ground, determining a haptic effect based in part on the controller signal, and outputting a haptic signal associated with the haptic effect to a haptic output device configured to output haptic effects.

The haptic output device may be configured to resist a relative movement between the virtual reality controller and the mechanical ground. Outputting the haptic effect may in some implementations comprise exerting a resistance on a cable assembly and/or a rod assembly. In some implementations, outputting the haptic effect may comprise exerting resistance with a smart material.

In yet another embodiment, a non-transitory computer readable medium may comprise program code, which when executed by a processor is configured to perform the above methods in any feasible combination.

These illustrative embodiments may be performed in any feasible combination and are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1 shows an illustrative system for providing kinesthetic feedback to virtual reality controllers.
Figure 2 shows another illustrative system for providing kinesthetic feedback to virtual reality controllers.
Figure 3 shows yet another illustrative system for providing kinesthetic feedback to virtual reality controllers.
Figure 4 illustrates an example embodiment for mechanically grounding virtual reality controllers configured to provide kinesthetic feedback.
Figure 5 illustrates another example embodiment for mechanically grounding virtual reality controllers configured to provide kinesthetic feedback.
Figures 6A and 6B illustrate example transducers for providing kinesthetic feedback to virtual reality controllers.
Figure 7 illustrates another example embodiment for virtual reality controllers having a normally slack assembly configured to provide kinesthetic feedback.
Figure 8 is a flow chart of method steps for one example embodiment for providing kinesthetic feedback to virtual reality controllers.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used in another embodiment to yield a still further embodiment. Thus, it is intended that this disclosure include modifications and variations as come within the scope of the appended claims and their equivalents.

### Illustrative Example of a Device for Kinesthetic Haptic Feedback to VR Controllers

One illustrative embodiment is a gaming system that includes a pair of VR controllers in communication with the gaming system. The VR controllers allow a user to interact with a virtual environment and with objects in the environment. When in use, the user holds her hands in a natural position. Thus, such controllers are often separated by a distance of approximately ten to a hundred or more centimeters. And while conventional controllers may provide vibrational haptics, such controllers are not capable of providing kinesthetic haptic feedback as described herein.

In the illustrative embodiment, the VR controllers are physically connected to one another via a telescoping rod assembly. The illustrative assembly is configured to provide kinesthetic haptic feedback over the relatively large displacement between the two controllers. Kinesthetic haptic feedback is useful for conveying compelling user interactions. For example, in a virtual, augmented or mixed reality system, the user may be able to directly manipulate objects. Such features are becoming increasingly prominent.

The illustrative system also includes a sensor configured to provide a signal indicating the extension of the rod relative to its fully extended and fully retracted states. The sensor signal can be used to determine the distance between the VR controllers.

The illustrative system also includes a haptic output device for resisting the retraction and extension of the telescoping rod, which can be used to provide a kinesthetic haptic effect. The system may utilize the processor of the gaming system or a separate processor to receive the sensor signal, determine a haptic effect, and then generate the appropriate haptic effect signal to send to the haptic output device.

For example, a user may execute a VR basketball game and then attempt to hold a basketball. When the user attempts to grasp the ball by decreasing the distance between the VR controllers, the sensor sends a signal or signals to the gaming system indicating the movement. The gaming system receives the signal and then, based at least in part on the signal, determines a haptic effect to be output to the user. For example, if the VR controllers are displaced a distance equal to the diameter of the ball, then the gaming system can resist any further movement of the controllers towards each other, which causes the user to feel as if she is squeezing the ball. The effect may vary based on the characteristics of the virtual object. For example, if the ball is soft, the effect may begin as a slight resistance that quickly increases until the user cannot move the controllers toward each other. The gaming system next outputs the haptic signal to the haptic output device, which generates the haptic effect. In one example embodiment, the virtual object comprises a ball; in such an embodiment the haptic output device may resist any movement of the controllers toward each other.

### Illustrative Systems for Compliance Illusions with Haptics

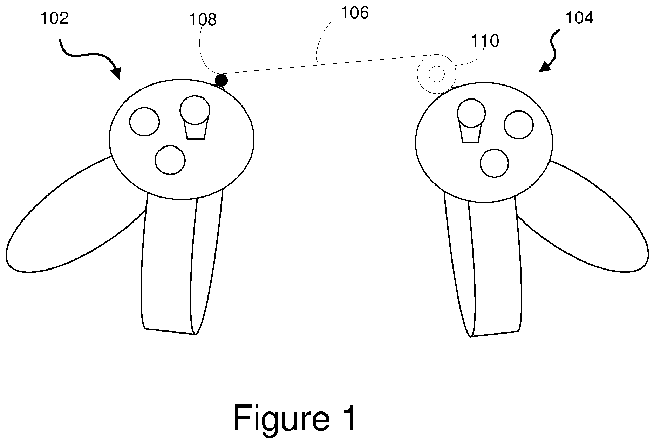

Figure 1 shows an illustrative system for providing kinesthetic feedback to virtual reality controllers. In the illustrative embodiment, the system includes a first VR controller 102 and a second VR controller 104 that are connected by a cable 106. The cable 106 is affixed to controller 102 at a point 108.

Affixed to the controller 104 is a spool 110. The spool 110 includes a sensor and a mechanism, such as a spring or motor, to cause the spool 110 to wind the cable 106. The spool 110 also includes a mechanism for resisting movement of the spool 110 and thereby provide a haptic effect. For example the spool may include a brake as described in detail below. The cable 106 and spool 110 may be referred to collectively as a cable assembly.

The embodiment shown in Figure 1 is a single degree-of-freedom implementation that provides resistive haptic effects as the cable 108 extends (i.e., only in one direction). During a default non-actuated interaction, the cable 108 freely unreels and reels back from the spool 110 as the user increases or decreases the distance between the two controllers 102, 104.

Such an embodiment may be used in a variety of user interactions. For instance, many two-hand interactions with such handheld controllers involve a dominant and a non-dominant hand. For instance, if a user reaches to touch an object or pull back a bowstring of a bow with the user's dominant (e.g., right) hand, the user holds their non-dominant (e.g., left) hand relatively still. Even extending two hands outward can often be conceptualized (from a kinesthetic haptic feedback point of view) as a stationary non-dominant hand and a moving dominant hand increasing the distance between the two controllers 102, 104 at twice the rate. The assembly shown in Figure 1 can provide kinesthetic haptic feedback during a relatively long range of extending motions. For example, the cable 108 can be sized based on the maximum distance desired between the two controllers 102, 104.

One example of how such a system might be used is for a VR game that allows a user to shoot an arrow. As a user draws the virtual bowstring back and increases the distance between the controllers 102, 104, a haptic output device of the spool 110 can provide resistive haptic feedback. In such an embodiment, the haptic output device may comprise a braking mechanism to slow the release of the cable 106, a mechanism to release the cable 106, or a mechanism to retract the cable 106. Another example in which an embodiment might be used is a VR environment in which a user is able to touch virtual objects. In such an environment, a user typically extends the relative distance between their left and right hands when reaching to touch an object. Consequently, kinesthetic feedback can be provided for many touch interactions by activating the haptic output device in spool 110 as the user reaches with their hand to touch the object. For example, as the user "touches" the edge of the object, a haptic output device comprising a braking mechanism may stop the relative movement between the two controllers. The haptic output device may also be controlled such that it provides a vibrotactile effect in addition to kinesthetic effects. The vibrotactile effect can be provided by varying the force of the braking mechanism. These examples are not meant to limit the types of designs that can be used to provide compelling haptic feedback with resistive haptics to those that occur during an extension (e.g., unreeling the cable 108).

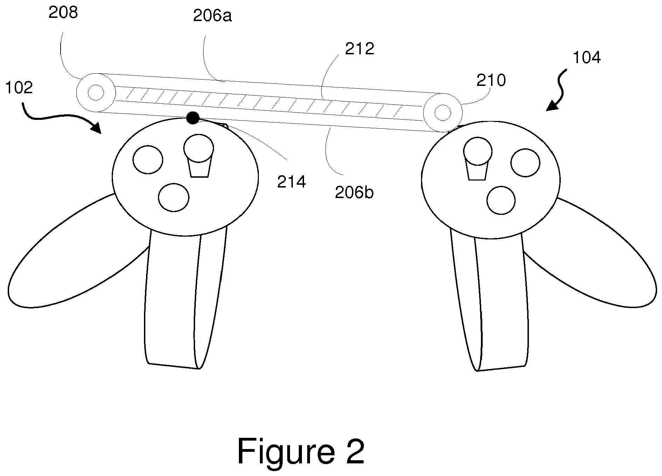

Figure 2 shows another illustrative system for providing kinesthetic feedback to virtual reality controllers. Like the embodiment shown in Figure 1, the embodiment in Figure 2 includes two VR controllers 102, 104. Figure 2 also includes a cable assembly, but the cable assembly in Figure 2 is capable of providing haptic feedback in two directions along a path (i.e., both extending and retracting). While multiple embodiments are feasible, in the embodiment shown, the cable mechanism includes a cable with two cable segments 206a, 206b. The cable segments 206a, 206b are affixed to the controller 102 at a point 214. A first one of the cable segments 206a is wrapped around a pulley 208 at one end and wound around a spool 210. The second cable segment 206b is wound around the spool 210. When the spool 210 spins clockwise, it puts tension on the first cable segment 206a while simultaneously releasing tension on the second cable segment 206b. Conversely, when the spool 210 spins counterclockwise, it puts tension on the second cable segment 206b while simultaneously releasing tension on the first cable segment 206a. Applying a braking force to the spool resists movement of the controllers 102, 104 relative to one another.

The pulley 208 and spool 210 are connected to either end of a beam 212. The beam 212 keeps the pulley 208 and the spool 210 from moving towards one another, however the controller 102 is affixed to the beam so that the haptic feedback assembly provides very little resistance to the controllers 102, 104 moving towards and away from one another. Preferably, the haptic feedback assembly is constructed with lightweight materials to reduce the weight added to the controllers 102, 104 by the assembly and thereby reduce any potential fatigue created for the user.

As shown in Figure 2, the anchor point 214 on the left controller 102 connects the controller to the cable segments 206a, 206b along their length. While the cable shown in Figure 2 comprises 2 segments, in other embodiments, the cable may comprise only one or more than two segments.

When a user extends the distance between the two controllers 102, 104, the second cable segment 206b is under tension and braking will provide haptic feedback. When the user contracts the distance between the two controllers, the first cable segment 206a is under tension and braking will provide haptic feedback. This design enables a greater range of kinesthetic haptic effects to be provided for any extending or contracting of the distance between the two handheld controllers 102, 104. Preferably, the mass of the assembly should be kept relatively low to minimize undesired torque or inertia.

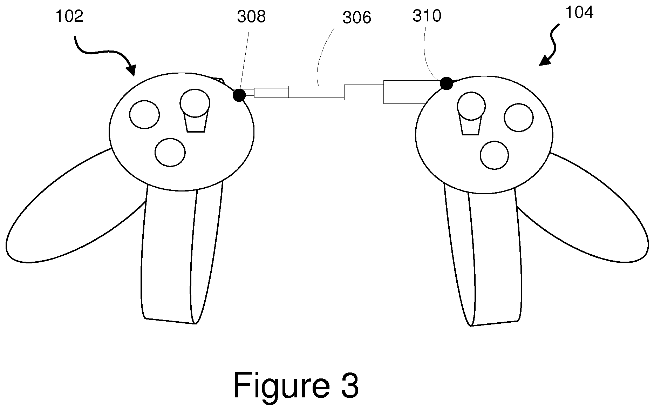

Figure 3 shows yet another illustrative system for providing kinesthetic feedback to virtual reality controllers. In the embodiments shown in Figure 3, VR controllers 102, 104 are connected by a telescoping haptic rod assembly 306 at points 308 and 310, respectively. Like the embodiment shown in Figure 2, the embodiment shown in Figure 3 is able to provide very stiff but smooth haptic effects. However, the embodiment shown in Figure 3 is able to do so without having any of the assembly protrude beyond the edges of the controllers 102, 104 during use. Such an embodiment may be particularly appropriate for user interactions involving large movements of both hands (e.g., for a person with a 2 m / 6' arm span who needs to fully extend the distance between their hands).

In some embodiments, haptic rods may provide advantages over the use of cables. For example, an advantage of haptic rods over cables is the reduction of the spider web of cables within the user's workspace. A single rod assembly can often render kinesthetic feedback equivalent to what would require a collection of three or more cables, and may be more practical for many interactions. In other embodiments, cables and haptic rods may be implemented together to provide haptic feedback.

The embodiment shown in Figure 3 includes a braking mechanism (not shown) to create kinesthetic haptic feedback as the rods extend or contract. In other words, the braking mechanism resists the extension or retraction of the telescoping rod haptic feedback assembly 306. While the telescoping haptic rod assembly shown in Figure 3 has five segments, various alternative embodiments may comprise fewer or more segments, depending on the maximum and minimum distances desired to be maintained between the controllers 102, 104. In other words, a greater number of smaller segments would be necessary to enable a user to move the two controllers 102, 104 very close together (e.g., < 10 cm / 4"). And a greater number and possibly longer segments would be necessary to move the controllers 102, 104 very far apart (e.g., > 1 m / 3' or around 2m / 6'). In embodiments requiring even greater distance between the controllers (e.g., room-scale VR environments), longer cables or beams might be used instead of or in combination with telescopic segments. In embodiments such as that shown in Figure 3, each additional telescoping segment will likely reduce overall stiffness and slightly increase overall minimum sliding friction (i.e., base resistance during a "no haptic" extension or contraction interaction).

In some embodiments, the telescopic telescoping haptic rod assembly 306 may instead comprise a flexible material, such as a smart material for which the stiffness may vary. In such an embodiment, the rod assembly 306 might comprise a single segment for providing haptic feedback between the two controllers 102, 104.

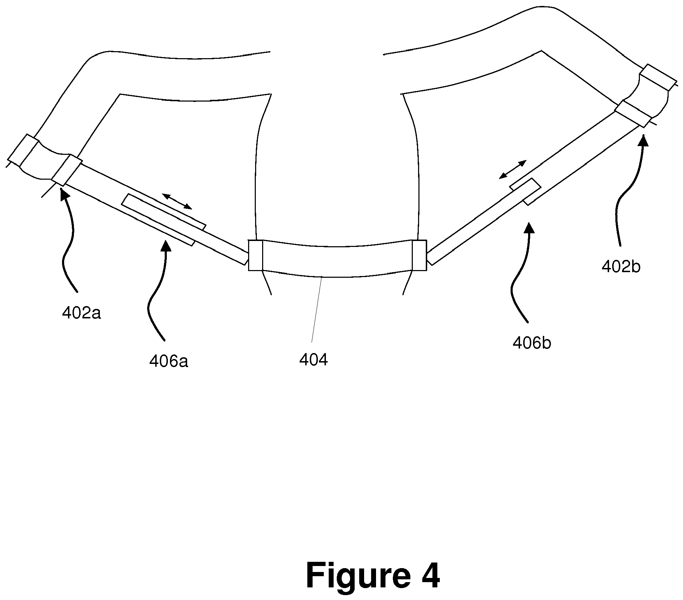

Figure 4 illustrates an example embodiment for mechanically grounding virtual reality controllers configured to provide kinesthetic feedback. In the embodiment shown in Figure 4, rather than mechanically grounding the two handheld controllers together, each handheld controller or another contact point, such as a wrist, can be attached to a wearable waist belt or vest. The embodiment shown includes two wrist bands 402a, 402b for the left and right wrists of the user, respectively. Each of the wrist bands 402a, 402b is attached to a waist band or belt 404. The waist belt 404 provides a mechanical grounding for application of kinesthetic effects to the wrist bands 402a, 402b. In some embodiments, the waist band 404 is configured such that it does not rotate around the user's waist.

The embodiment shown also includes two kinesthetic haptic rods 406a, 406b. Each of these rods 406a, 406b is connected to a respective wrist band 402a, 402b at a first end, and to the waist band 404 at the other, distal end. Each kinesthetic haptic rod 406a, 406b has a braking mechanism that can provide resistance when expanding or contracting.

While in the embodiment shown in Figure 4, the haptic rods 406a, 406b are attached at the side of the user's waist, in other embodiments, the haptic rods 406a, 406b may be attached at the center of the front of the user's waist or at another point along the user's waist, depending on the particular use case envisioned for the effect. In addition, various embodiments may use different points on the user's body for anchors, such as the arms or other points on the user's torso. Further, the joint at the user's wrists 402a, 402b may be free moving or may include some type of additional haptic output device.

An embodiment, such as the one shown in Figure 4, can provide the user with a wide range of motion. Further, a typical VR session may last 15-20 minutes and so result in fatigue to a user. An embodiment such as that shown in Figure 4 can help to ease user fatigue because the stiffness of the rods 406a, 406b, may be continually adjusted to provide both arm support and kinesthetic feedback. Users are typically more sensitive to relative changes in force, rather than absolute levels. Thus, a relative increase or decrease in telescoping rod stiffness could provide compelling haptic effects in addition to a base level of fatigue support. Such an embodiment could also alternate between two modes: (i) fatigue support and (ii) freeform kinesthetic haptics. The fatigue support mode might, for example, have a high base stiffness where adjustments are focused on reducing fatiguing effects of gravity on a user's arm(s) while performing mid-air gestures and other interactions. In contrast, the freeform kinesthetic state might have a very low base stiffness where adjustments are focused on generating compelling kinesthetic haptic effects as the user moves either of their hands. In other embodiments, cables may be used in place of the haptic rods 406a, 406b. While such an embodiment may not contribute to fatigue support, it would be able to provide freeform kinesthetic haptics. Embodiments may also help enhance the safety of systems. For example, such devices could be designed to restrict a user's movement to a biomechanically safe motion that reduces the chances of sprains, repetitive strain injuries, and the like.

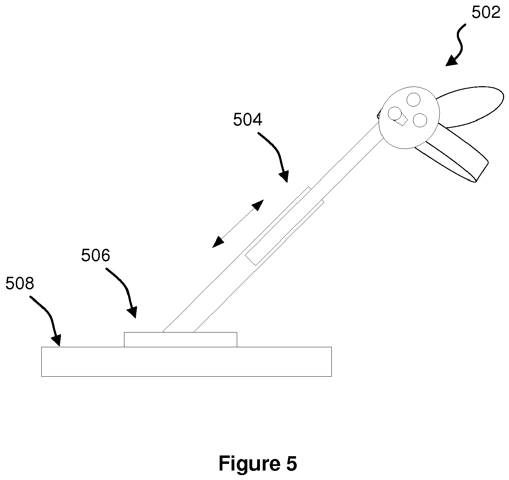

Figure 5 illustrates another example embodiment for mechanically grounding virtual reality controllers configured to provide kinesthetic feedback. In the embodiment shown in Figure 5, a controller 502 is attached to one end of a haptic rod assembly 504. At its other end, the haptic rod assembly 504 is attached to a base 506. A mechanical ground 508 is provided as a solid surface to which the assembly may be attached (as opposed to an electrical ground) and may be any object in the environment other than the user's body (as in Figure 4). For example, in some embodiments, the mechanical ground 508 may be the wall, ceiling, or floor of a room. In other embodiments, the mechanical ground may be a video game console.

The base 506 may be attached to the mechanical ground 508 using various methods. For instance, a removable adhesive, such as a Very High Bond (VHB) strip, could be used to attach haptic cable or rod assemblies to the user's environment. For example, a game player could attach one or more cables and/or rods to a table or wall in their environment before a gameplay session. Multiple cable assemblies may be practical for some consumer (or possibly arcade) VR environments because they can be fully reeled in when not in use.

While the embodiment shown in Figure 5 includes one haptic rod 504 extending from the controller 502 to the base 506, in other embodiments, multiple haptic rods might be utilized. For example, a first haptic rod may extend in one direction, while a second haptic rod extends at a 90 degree angle from the first rod. Such embodiments can more effectively provide multi-directional haptic feedback. For example, an embodiment comprising two rods may be able to effectively provide two-dimensional feedback, while an embodiment comprising three rods is capable of providing three-dimensional feedback. Such embodiments can provide various combinations of haptic effects to the user. And, as with other embodiments described herein, such embodiments may help to ease user fatigue during use.

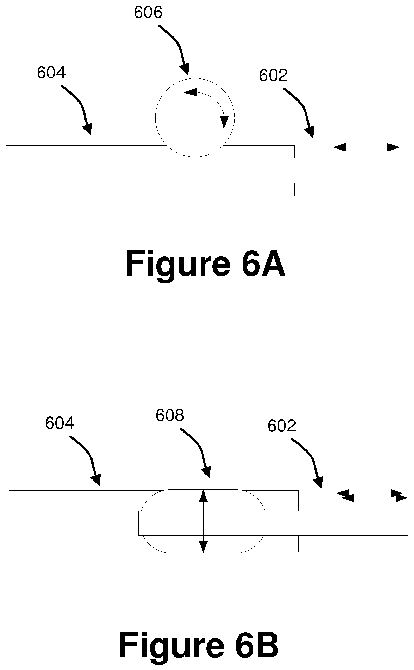

Figures 6A and 6B illustrate example transducers for providing kinesthetic feedback to virtual reality controllers. In the embodiment shown in Figure 6a, a haptic rod assembly has an inner rod 602 and an outer rod 604. The inner rod 602 has a smaller diameter so that it can fit within the outer rod 604. The haptic rod assembly also includes a wheel 606. The wheel 606 is configured such that it can apply a braking force on the inner rod 602. For instance, in one embodiment, the wheel is affixed to a shaft of a motor, which exerts a force on the wheel 606. The wheel 606 also has an outer surface in contact with the inner rod 602, which allows the wheel 606 to exert a braking or resisting force on the inner rod 602 to provide a haptic effect.

In another embodiment shown in Figure 6B, a haptic feedback assembly also has an inner rod 602 and outer rod 604. However, in the embodiment shown in Figure 6B, the inner rod 602 has a haptic output device 608 attached to the inner rod 602 and configured to exert a force on the outer rod 604 to resist movement of the two rods 602, 604 relative to one another. When the haptic output device 608 is activated and released, it increases or decreases the sliding friction between the inner rod 602 and outer rod 604. The haptic output device 608 may comprise various materials, including, for example, an electrorheological fluid, a hydrological fluid, a pneumatic assembly, or a shape bending material. The haptic output device 608 may be configured as a brake, such as an electromagnetic brake, an air bladder, a hydraulic brake, or a rack-and-pinion brake. In other embodiments, the haptic output device 608 may comprise a smart material, such as an electroactive polymer, which expands or contracts in response to an input, such as an electrical impulse.

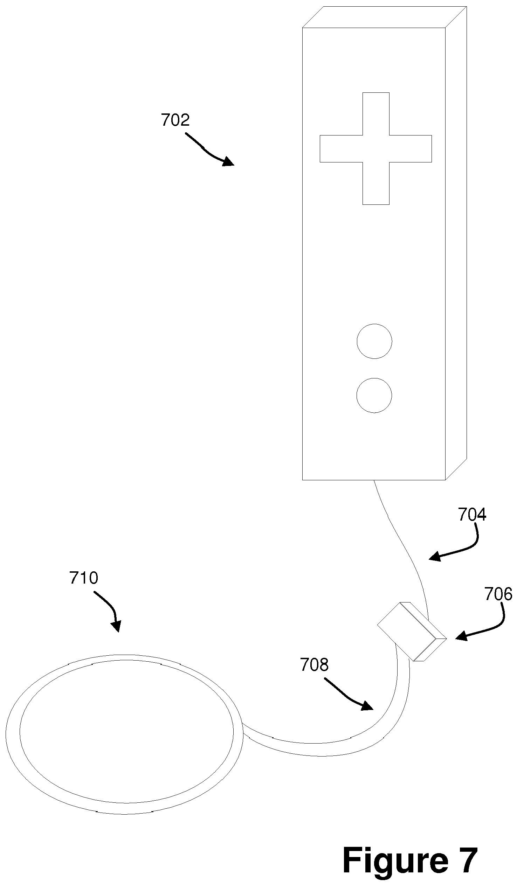

Figure 7 illustrates another example embodiment for virtual reality controllers having a normally slack assembly configured to provide kinesthetic feedback. The embodiment shown in Figure 7 includes a controller 702. The normally slack assembly is configured to output a haptic effect on the controller. In the embodiment shown, the controller is attached to the first end of a cable 704. The cable is normally slack but may be made taut by exerting a force in a direction away from the controller.

The second end of the cable 704 is attached to an actuator 706. For example, the actuator may comprise a small motor and spool for retracting cable into the housing of the actuator 706. By retracting the cable, the actuator 706 is able to output a haptic effect on the controller 702. For example, by quickly retracting and then releasing the cable 704, the actuator 706 is able to cause a tugging effect on the controller 702.

The actuator 706 is attached to the first end of a strap 708. The second end of the strap 708 is attached to a loop 710. The strap 708 and loop 710 serve as a ground to anchor the actuator 706. For example, the loop 710 may be worn by a user around the user's wrist, thereby creating an anchor against the actuator 706, allowing the actuator 706 to exert force on the cable 704. The cable 704 and actuator 706 together form a coupling between the strap 708 and the controller 702.

In such an embodiment, haptic feedback could include tugging sensations on an otherwise flexible, slack assembly. Other embodiments comprising a normally slack assembly may comprise cables or beams having flexible (i.e., "slack") states. In some such embodiments, slack beams may comprise smart materials that are capable of varying in stiffness.

While the embodiments shown in Figures 1-7 illustrate controllers having single anchor points, in some embodiments, the controllers may include additional anchor points or may be anchored to additional body sites. For example, a haptic-enabled cable, strap or beam might be anchored between a user's forearm and hand in addition to the user's hip or between multiple of the user's fingers and the user's hand. Further, multiple haptic cables, straps, or beams might be combined in various ways to render forces in multiple directions at the same time. The number of different directions or types of haptic output devices may be limited by space or cost constraints. For example, a preferred embodiment may comprise one to three haptic output devices. In yet further embodiments, a plurality of anchored linkages, including for example mixed types (e.g., one rod and one spool), can be implemented to enable a variety of haptic effects. For example, a first type of actuator may be utilized to act as a blocking force, while a second type of actuator is used to provide a shearing, twisting, or vibrotactile effect.

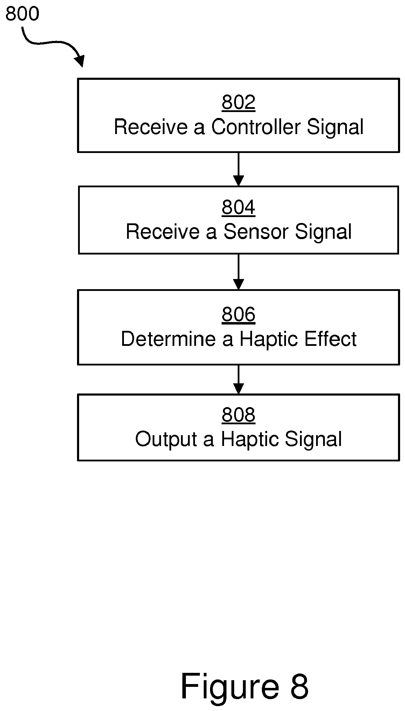

Figure 8 is a flow chart of method steps for one example embodiment for providing kinesthetic feedback to virtual reality controllers. The method begins at step 802 with a processor receiving a signal from a controller, such as the controllers illustrated in Figures 1-4. The processor, for example, may be a processor in a gaming console. The processor may be in communication with the controller via a wired or wireless connection and receiving sensor signals in order to control operations in a game.

The processor also receives at 804 a sensor signal from a sensor indicating the relative position of a haptic rod or cable assembly attached to the controller. For example, a sensor signal may be received from a sensor attached to a haptic rod and configured to report the degree to which the haptic rod is extended or retracted.

The processor uses the controller signal and sensor signal to determine a haptic effect at 806. For instance, in one scenario, the user is playing a game and "touches" the edge of an object in the game. The haptic rod is fully extended, and the user then attempts to lower the controller towards a base, thus compressing the rod. The processor determines that the haptic rod should resist the user's action to reflect the edge of the object and generates a haptic effect to do so.

At 808 the processor then outputs a haptic signal configured to cause a haptic output device to output the effect. The haptic output device in the haptic rod exerts a resistance to the compression by the user. In this way, the user can feel the edge of the object in the game.

Embodiments of the invention may be utilized in a variety of different applications. For example, embodiments may be used in a variety of gaming applications, such as the bow- and-arrow example described above, a car racing simulator, or a basketball game.

For example, in one embodiment, a user is playing basketball. As the user reaches down to pick up a ball and comes in virtual contact with the ball, the user's hands come together or approach a ground. An embodiment can provide resistance to the compression of a haptic rod to simulate the edge of the basketball. Then, as the user raises the basketball off the ground, the haptic rod provides another, smaller resistance to the extension of the rod to simulate the weight of the basketball in the user's hand. The user may then wish to dribble the ball. As the user releases the ball, the resistances changes. Then when the ball contacts the hand, a different effect may be output. Typically, the angle at which the effect is output to the user is not critical because the user can see the interaction in the game, and the user's mind will compensate for the fact that the angle of the haptic effect is somewhat different than what the user is seeing or from what the user expects due to an audio signal.

Embodiments might be useful in commercial simulations as well, such as surgery or working in a weightless environment. Another example might be in simulating a cooking environment where actions such as picking up fruit or interacting with devices such as a blender could be simulated. Other examples might include working as an automobile or aircraft mechanic or even as a retail store cashier.

Embodiments of the present invention may also help to restrict a user's movement to motions that are more biomechanically safe thereby helping to reduce the chances of sprains and repetitive strain injuries, etc. For example, embodiments such as the one shown in Figure 7 may be integrated into safety straps and bands.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A system comprising:
a user interface device comprising:
a virtual or augmented reality controller configured to receive input from a user and output a controller signal;
a haptic output device coupled to the virtual or augmented reality controller and to a mechanical ground, the haptic output device configured to output haptic effects; and
a processor coupled to the virtual or augmented reality controller and the haptic output device, the processor configured to:
receive the controller signal;
determine a haptic effect based in part on the controller signal; and
transmit a haptic signal associated with the haptic effect to the haptic output device.

2. The system of claim 1, wherein the haptic output device comprises a cable assembly.

3. The system of claim 1, wherein the haptic output device comprises a rod assembly, optionally a telescoping rod.

4. The system of claim 1, wherein the haptic output device comprises a brake for resisting a relative motion between the virtual or augmented reality controller and the mechanical ground.

5. The system of claim 4, wherein the brake comprises one of an electromagnetic brake, an air bladder, a hydraulic brake, a rack-and-pinion brake, or a smart material.

6. The system of claim 4, wherein:
the haptic output device comprises a telescopic rod having a first rod segment and a second rod segment; and
the brake is affixed to the first rod segment and configured to exert a force against the second rod segment.

7. The system of claim 4, wherein:
the haptic output device further comprises a sensor for sensing a relative position between the virtual or augmented reality controller and the mechanical ground and generating a sensor signal reflecting the relative position; and
the processor is configured to receive the sensor signal and determine the haptic effect based at least in part on the sensor signal.

8. The system of any preceding claim, wherein the virtual or augmented reality controller comprises a first virtual or augmented reality controller and a second virtual or augmented reality controller.

9. The system of any preceding claim, wherein the mechanical ground is coupled to either the user or a fixed structure.

10. The system of any preceding claim, wherein the haptic output device is configured to output a kinesthetic effect and/or a vibrotactile effect.

11. The system of claim 1, wherein the haptic output device comprises an actuator coupled to a mechanical ground by a coupling to the mechanical ground and to the virtual or augmented reality controller, the actuator configured to output a haptic effect on the controller by exerting a force on the coupling between the ground and the controller.

12. The system of claim 11, wherein the mechanical ground comprises a strap configured to be worn by a user.

13. A method comprising:
receiving a controller signal from a sensor configured to detect an input from at least one virtual or augmented reality controller coupled to a mechanical ground;
determining a haptic effect based in part on the controller signal; and
outputting a haptic signal associated with the haptic effect to a haptic output device configured to output haptic effects.

14. The method of claim 13, wherein the haptic output device is configured to resist a relative movement between the virtual reality controller and the mechanical ground.

15. The method of claim 13 or claim 14, wherein outputting the haptic effect comprises exerting a resistance on a cable assembly and/or a rod assembly.

16. The method of claim 13 or claim 14, wherein outputting the haptic effect comprises exerting resistance with a smart material.

17. A non-transitory computer readable medium comprising program code, which when executed by a processor is configured to cause the processor to perform the method of any of claims 13 to 16.
